(19) Europäisches Patentamt
European Patent Office
Office européen des brevets

(11) Veröffentlichungsnummer: **0 010 724**
**B1**

# (12) EUROPÄISCHE PATENTSCHRIFT

(45) Veröffentlichungstag der Patentschrift: **28.07.82**

(51) Int. Cl.³: **C 08 G 8/28**, C 08 G 14/12, C 09 J 3/16

(21) Anmeldenummer: **79104104.9**

(22) Anmeldetag: **23.10.79**

(54) **Mischkondensationsprodukte auf Basis von Phenol-Butyraldehyd-Harzen, Verfahren zu deren Herstellung und Verwendung.**

(30) Priorität: **28.10.78 DE 2847030**

(43) Veröffentlichungstag der Anmeldung: **14.05.80 Patentblatt 80/10**

(45) Bekanntmachung des Hinweises auf die Patenterteilung: **28.07.82 Patentblatt 82/30**

(84) Benannte Vertragsstaaten: **DE FR GB IT SE**

(56) Entgegenhaltungen:
**DE-A-2 445 873**
**DE-A-2 624 858**
**DE-B-1 086 043**
**DE-C-871 642**
**GB-A-507 013**
**US-A-2 902 458**
**R. VIEWEG und E. BECKER «Kunststoff-Handbuch», Band X, «Duroplaste», 1968, Carl Hanser Verlag, München Seite 23, Zeilen 10 bis 12**

(73) Patentinhaber: **BASF Aktiengesellschaft, Carl-Bosch-Strasse 38, D-6700 Ludwigshafen (DE)**

(72) Erfinder: **Petersen, Harro, Dr. Dipl.-Chem., Kalmitstrasse 23, D-6710 Frankenthal (DE)**
Erfinder: **Krause, Hans-Joachim, Dr. Dipl.-Chem., Pariser Strasse 31, D-6700 Ludwigshafen (DE)**
Erfinder: **Fischer, Kurt, Mundenheimer Strasse 168, D-6700 Ludwigshafen (DE)**
Erfinder: **Segnitz, Adolph, Dr. Dipl.-Chem., Im Roehrich 46, D-6702 Bad Duerkheim 1 (DE)**
Erfinder: **Zaunbrecher, Horst, Freiligrathstrasse 1, D-6520 Worms (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Mischkondensationsprodukte auf Basis von Phenol-Butyraldehyd-Harzen, Verfahren zu deren Herstellung und Verwendung

Gegenstand der Erfindung ist ein Verfahren zur Herstellung von Mischkondensationsprodukten auf Basis von Phenol-Butyraldehyd-Harzen durch Kondensieren eines Phenols mit Butyraldehyd in Gegenwart von sauren Katalysatoren.

Phenol-Butyraldehyd-Harze werden in Analogie zu Phenol-Formaldehyd-Harzen durch Kondensation von Phenol mit n- oder Isobutyraldehyd hergestellt. Die bekannten Harze werden beispielsweise als Bindemittel für die Herstellung von Holzfaserplatten verwendet. Nachteilig bei den bekannten Harzen ist die Tatsache, dass sich besonders bei dem Einsatz von Phenol-Formaldehyd-Harzen erhebliche Mengen an Phenol abspalten und dadurch eine erhebliche Umweltbelastung darstellen. Ausserdem spalten diese Produkte Formaldehyd ab und erschweren daher auch aus diesem Grunde die Verarbeitbarkeit.

Aus der US-A 2 902 458 ist bekannt, Phenol-Formaldehyd-Harze mit wässrigen Emulsionen von Polyvinylacetat in Gegenwart von Emulgiermitteln umzusetzen. Dabei werden Produkte erhalten, die beispielsweise bei der Herstellung von Spanplatten oder zum Verkleben von Holz eingesetzt werden. Der Nachteil dieser Produkte äussert sich ebenfalls bei der Verarbeitung, bei der erhebliche Mengen an Phenol und Formaldehyd abgespalten werden.

Aufgabe der Erfindung ist es daher, modifizierte Phenol-Butyraldehyd-Harze zur Verfügung zu stellen, die während der Verarbeitung kein Phenol abspalten, so dass bei der Verarbeitung der Produkte praktisch keine Umweltbelastungen auftreten.

Die Aufgabe wird bei dem eingangs beschriebenen Verfahren dadurch gelöst, dass man pro Mol Phenol 0,8 bis 2,0 Mol Butyraldehyd einsetzt und vor, während oder nach der Kondensation von Phenol und Butyraldehyd 5 bis 50 Gew.-%, bezogen auf Phenol und Butyraldehyd, eines funktionelle Gruppen enthaltenden thermoplastischen Kunstoffes oder eines Gemisches solcher Kunststoffe zusetzt, und eine Mischkondensation bei Temperaturen von 80 bis 220 °C durchführt.

Phenole, die zur Herstellung der Phenol-Butyraldehyd-Kondensate benutzt werden können, sind insbesondere solche der allgemeinen Formel

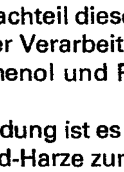

Hierin bedeutet R ein Wasserstoff-, Chlor- oder Bromatom oder eine Alkylgruppe mit 1 bis 18 C-Atomen in irgendeiner ihrer isomeren Formen, die in der o-, m- oder p-Stellung zur Hydroxylgruppe stehen, eine alicyclische Gruppe mit 5 bis 18 C-Atomen, z.B. die Cyclopentyl-Cyclohexyl-, Methylcyclohexyl-oder Butylcyclohexylgruppe, eine aromatische Gruppe oder Aralkylgruppe mit 6 bis 18 C-Atomen, wie die Phenyl-, α-Methylbenzyl-, Benzyl- oder Cumylgruppe. Weiterhin können phenolische Alkyl-, Cycloalkyl-, Aryl- und Aralkylketone sowie phenolische Alkyl-, Cycloalkyl-, Aryl- und Aralkylcarbonsäuren verwendet werden.

Geeignete substituierte Phenole sind beispielsweise p-tert-Butylphenol, p-sek-Butylphenol, p-tert-Hexylphenol, p-Isooctylphenol; p-Phenylphenol, p-Benzylphenol (Bis-phenol A), p-Cyclohexylphenol, p-Decylphenol, p-Dodecyl-phenol, p-Tetradecylphenol, p-Octadecylphenol, p-Nonylphenol, p-Methylphenol, p-β-Naphthylphenol, p-α-Naphthylphenol, p-Pentadecylphenol, p-Cetylphenol, p-Cumylphenol, p-Hydroxyacetophenon, p-Hydroxybenzophenon, mit Limonen oder Ölsäure alkylierte Phenole sowie die entsprechenden o- und m-Derivate, wie m-Butylphenol und o-Butylphenol und Gemische derartiger Phenole.

Aus dem Vorstehenden ist ersichtlich, dass praktisch jedes Phenol zur Herstellung der erfindungsgemäss einsetzbaren Phenolharze verwendet werden kann, sofern es eine in bekannter Weise reaktionsfähige Stelle im Molekül besitzt, welche die Ausbildung von – substituierten – Methylenbrücken unter Bildung eines Kondensationsproduktes ermöglicht. Man kann reine Phenol verwenden, doch ist dies nicht immer erforderlich. Beispielsweise kann man auch Phenole alkylieren und hierauf mit Butyraldehyd unter Bildung eines Rohproduktes zur Umsetzung bringen, das polyalkylierte sowie nichtalkylierte Phenole enthält. Man kann auch Gemische der vorgenannten Phenole verwenden.

Als Aldehyde kommen n-Butyraldehyd und Isobutyraldehyd sowie Gemische der isomeren Butyraldehyde in Betracht.

Als saure Katalysatoren verwendet man Phosphortrichlorid, Phosphoroxychlorid und Phosphorpentachlorid, Schwefelsäure, konzentrierte Salzsäure und aromatische Sulfonsäuren, wie p-Toluolsulfonsäure. Die erforderliche Menge an saurem Katalysator beträgt im allgemeinen weniger als 5, insbesondere 0,1 bis 1 Gew.-%, bezogen auf Phenol.

Vorzugsweise verwendet man das unsubstituierte Phenol und Isobutyraldehyd zur Herstellung der Phenol-Butyraldehyd-Harze. Ein Mol eines Phenols wird mit 0,8 bis 2,0, vorzugsweise 1,0 bis 1,2 Mol Isobutyraldehyd und/oder n-Butyraldehyd kondensiert.

Zur Herstellung der Phenol-Butyraldehyd-Harze kann man das Phenol und den sauren Katalysator in dem Reaktionsgefäss vorlegen und den Aldehyd kontinuierlich oder portionsweise zugeben. Die Kondensation wird vorzugsweise in Abwesenheit eines Lösungsmittels vorgenommen. Um von Anfang an eine gute Durchmischung der Komponenten zu bewerkstelligen, wird in diesen Fällen das Phenol in bereits geschmolzenem Zustand eingesetzt bzw. im Reaktionsgefäss aufgeschmolzen, bevor Isobutyraldehyd oder n-Butyraldehyd eingesetzt wird. Bei Zugabe des Butyraldehyds beginnt die Reaktion. Sie ist an einer Temperatursteigerung des Reaktionsgemisches zu erkennen. Die Kondensation des Phenols mit dem Butyraldehyd kann auch in der Weise durchgeführt werden, dass man die Reaktionskomponenten gleichzeitig dem Reaktor zuführt, wobei darauf zu achten ist, dass die Reaktion kontrollierbar verläuft. Sie kann diskontinuierlich oder auch kontinuierlich durchgeführt werden. Ebenso ist es möglich, die Kondensationsreaktion auch unter Druck bei höheren Temperaturen durchzuführen. In diesem Fall benötigt man kürzere Verweilzeiten. Die Temperatur bei der Kondensation kann bis zu 200 °C betragen. Die Kondensation kann jedoch auch unter relativ milden Bedingungen durchgeführt werden, in dem man den Aldehyd unter guter Durchmischung zum Phenol zugibt und am Rückfluss sieden lässt. Das bei der Kondensation entstehende Wasser bildet beispielsweise mit Isobutyraldehyd ein Azeotrop und kann daher auf diese Weise leicht aus dem System mit Hilfe bekannter Vorrichtungen entfernt werden. Mit fortschreitender Kondensation steigt die Temperatur des Reaktionsgemisches an. In Abhängigkeit von der Grösse des Ansatzes wird das Reaktionsgemisch 4 bis 7 Stunden auf eine Temperatur von 105 °C erhitzt. Die Kondensation kann jedoch auch in Gegenwart von Lösungsmitteln, z.B. Toluol oder Xylol durchgeführt werden, jedoch bedeutet diese Massnahme zusätzliche Kosten, weil anschliessend das Lösungsmittel wieder entfernt werden muss. Die Kondensationsreaktion wird so lange fortgeführt, bis der n-Butyraldehyd oder Isobutyraldehyd einkondensiert ist. Der Fortgang der Kondensation kann verfolgt werden, indem man dem Reaktionsgemisch eine Probe entnimmt, das Wasser aus der Probe entfernt und den Erweichungspunkt bestimmt. Der Erweichungspunkt des wasserfreien Phenol-Butyraldehyd-Kondensats beträgt 80 bis 120 °C (gemessen nach DIN 53 180).

Bei der Herstellung der Kondensationsprodukte aus Phenol und Butyraldehyden kann man übliche Modifizierungsmittel verwenden. Bei diesen Stoffen handelt es sich um Harnstoff, cyclische Harnstoffe, wie Äthylen- und Propylenharnstoff, Aminotriazine sowie die Methylol- oder Alkoxymethylderivate der genannten Verbindungen. Die bei der Kondensation von Phenol und Butyraldehyd verwendete Menge dieser Verbindungen beträgt bis zu 0,4 Mol pro Mol Phenol. Es ist auch möglich, Polykondensationsprodukte von Harnstoffen oder Aminotriazinen zu Beginn oder während der Kondensation oder auch bei der Mischkondensation einzusetzen.

Nach Abschluss der Kondensation kann man das Phenol-Butyraldehyd-Harz neutralisieren. Hierfür kann man Ammoniak, Amine sowie auch Natronlauge und Kalilauge verwenden. Vorzugsweise wählt man als Base Ammoniak. Durch Neutralisation des Harzes werden Rückspaltung und Nebenreaktionen weitgehend vermieden. Sofern eine Neutralisation vorgenommen wird, entfernt man das Wasser, überschüssigen Aldehyd und die flüchtigen Nebenprodukte der Kondensationsreaktion. Vorteilhafterweise werden die flüchtigen Produkte unter vermindertem Druck abdestilliert. Die leicht flüchtigen Produkte können vor oder nach dem Zusatz eines thermoplastischen, funktionelle Gruppen enthaltenden Kunststoffs abdestilliert werden.

Unter thermoplastischen Kunststoffen, die funktionelle Gruppen enthalten, sollen alle Polymerisate verstanden werden, die mit Phenol-Butyraldehyd-Harzen, Phenol oder mit Isobutyraldehyd bei Temperaturen bis zu 220 °C reagieren können. Mit Ausnahme von Polystyrol, Polyäthylen, Polypropylen, Polyisobutylen und nicht modifizierten Kautschuken kommen alle thermoplastischen Kunststoffe in Betracht. Funktionelle Gruppen, die in den thermoplastischen Kunststoffen enthalten sind, können folgende Gruppierungen sein: Ester-, Amid-, Hydroxyl-, Amin-, Carboxyl-, Anhydrid-, SH-, Carbamat-, Isocyanat-, Harnstoff-, N-Methylol- und NH-Gruppen sowie Halogenatome. Bei den thermoplastischen Kunststoffen kann es sich um Homo- oder Copolymerisate handeln. Beispiele für thermoplastische Kunststoffe sind Polyvinylacetat, Polyvinylpropionat, Homopolymerisate von Estern äthylenisch ungesättigter $C_3$- bis $C_5$-Carbonsäuren, wie Acrylsäuremethylester, Acrylsäurebutylester, Acrylsäure-2-äthylhexylester, Methacrylsäuremethylester, Methacrylsäurebutylester, Crotonsäurepropylester, Maleinsäuredibutylester, Fumarsäurediäthylester, Maleinsäuremonomethylester und Fumarsäuremonobutylester. Besonders hervorzuheben sind ausserdem die Copolymerisate des Äthylens mit Vinylestern, wie Vinylacetat, Vinylpropionat und Vinylbutyrat, Copolymerisate des Äthylens mit Estern äthylenisch ungesättigter $C_3$- bis $C_5$-Carbonsäuren, wie Acrylsäurebutylester, Methacrylsäurebutylester sowie Copolymerisate des Äthylens, die ausser den angegebenen Comonomeren weitere Monomere einpolymerisiert enthalten, beispielsweise $C_3$- bis $C_5$-äthylenisch ungesättigte Carbonsäuren, deren Amide oder Ester mit Alkoholen und/oder Aminoalkoholen. Beispiele für weitere in Betracht kommende thermoplastische Kunststoffe sind Polyvinylchlorid, Polyvinylidenchlorid, Polyamide, wie Polycaprolactam und Kondensationsprodukte aus Adipinsäure und Hexamethylendiamin, Polyester z.B. aus Terephthalsäure und Äthylenglykol, Copolymerisate des Styrols mit Maleinsäureanhydrid, Copolymerisate aus Styrol und Maleinsäure, Copolymerisate aus Styrol und Estern äthylenisch ungesättigter $C_3$- bis $C_5$-Carbonsäuren, Kondensationsprodukte aus Harnstoff und Formaldehyd, Polyvinylalkohol, Melaminformaldehydharze und oxidiertes Polyäthylenwachs. Die funktionellen Gruppierungen im thermoplastischen Kunststoff müssen in einer Menge vorhanden sein, dass eine Vernetzung möglich ist. In den meisten Fällen ist bereits ein Gehalt von 0,1 Gew.-% an funktionellen Gruppen ausreichend, um Vernetzungen bei der Mischkondensation zu bewirken. Der Mindestgehalt an funktionellen Gruppen im thermoplastischen Kunststoff ist starken Schwankungen unterworfen

und hängt beispielsweise von der Reaktivität der funktionellen Gruppen ab. Er kann leicht mit Hilfe von Vorversuchen ermittelt werden. Sofern nach der Mischkondensation eine homogene Mischung anfällt, enthält der thermoplastische Kunststoff eine ausreichende Menge funktioneller Gruppen. Beim Erhitzen von Phenol-Butyraldehyd-Harzen mit Polyäthylen oder Polystyrol auf Temperaturen von 170 bis 190 °C werden dagegen Produkte erhalten, die sich beim Abkühlen entmischen. So reichen beispielsweise bei Copolymerisaten aus Äthylen und Vinylacetat und/oder Alkylacrylaten bereits Monomerengehalte von 5% Vinylacetat oder Alkylacrylat aus. Das Molekulargewicht der thermoplastischen Kunststoffe kann in einem weiten Bereich schwanken und bildet keine Einschränkung für die Anwendbarkeit bei der Herstellung der erfindungsgemässen Mischkondensate. Die thermoplastischen Kunststoffe können sowohl in fester Form als auch in einem organischen Lösungsmittel gelöst oder als wässrige Dispersion vorliegen. Bei den Dispersionen kann es sich um Primär- bzw. Sekundärdispersionen handeln. Die Dispersionen bzw. die Polymerisatlösungen können direkt zur Herstellung der erfindungsgemässen Mischkondensationsprodukte verwendet werden. Die thermoplastischen Kunststoffe können jedoch auch zuvor aus den Lösungen bzw. den Dispersionen isoliert werden.

Aufgrund des Gehalts an funktionellen Gruppen ist der thermoplastische Kunststoff mit dem Phenol-Butyraldehyd-Harz vernetzbar. Die Mischkondensation des Harzes mit dem thermoplastischen Kunststoff wird erfindungsgemäss vor, während oder nach der Kondensation von Phenol mit Butyraldehyd durchgeführt. Vorzugsweise lässt man das Phenol-Butyraldehyd-Harz nach dem Entwässern mit dem thermoplastischen Kunststoff oder einer Mischung von thermoplastischen Kunststoffen reagieren. Die Reaktion kann diskontinuierlich oder kontinuierlich bei Temperaturen in dem Bereich von 80 bis 220, vorzugsweise 120 bis 180 °C durchgeführt werden. Die Reaktionszeit kann in einem weiten Bereich schwanken, z.B. zwischen einer Minute bis 5 Stunden. Die Reaktionszeit hängt im wesentlichen von der Temperatur bei der Umsetzung ab. Eine über 5 Stunden hinausgehende Reaktionszeit, z.B. 10 Stunden Temperung bei einer Temperatur von 180 °C verändert die Reaktionsprodukte nicht wesentlich. Die Weiterkondensation, d.h. die Umsetzung des thermoplastischen Kunststoffs mit dem Phenol-Butyraldehyd-Harz kann unter vermindertem Druck, bei Normaldruck sowie auch unter höheren Drücken bei höheren Temperaturen kontinuierlich oder diskontinuierlich vorgenommen werden. Bezogen auf Phenol und Butyraldehyd setzt man bei der Mischkondensation 5 bis 50, vorzugsweise 10 bis 25 Gew.-% eines thermoplastischen Kunststoffs oder eines Gemisches von thermoplastischen Kunststoffen zu. Bei der Weiterkondensation entstehen Mischkondensate, die noch schmelzbar sind.

Setzt man den thermoplastischen Kunststoff bei der Weiterkondensation in Form von Lösungen bzw. als Dispersion ein, so muss man das Lösungsmittel bzw. das Wasser aus dem System entfernen. Dieses kann besonders schonend mit Hilfe einer azeotropen Destillation oder Abdestillieren der flüchtigen Bestandteile unter vermindertem Druck erfolgen. Die Schmelzpunkte der Mischkondensate betragen nach DIN 53 180 zwischen 60 und 170 °C. Die Mischkondensate werden in üblichen Vorrichtungen zerkleinert und vorzugsweise pulverisiert. Sie werden vor allem als Schmelzkleber verwendet und haben sich besonders als Bindemittel für Faservliese bewährt. Die Mischkondensate können ausserdem zur Herstellung von Klebstoffmischungen, Holzleimen, Kernsandbindemitteln oder als Klebrigmacher für Kautschukmischungen verwendet werden.

Die Mischkondensate finden vor allem Verwendung bei der Herstellung von Dämmatten für die Autoinnenausstattung. Diese Dämmatten werden erhalten, indem man Fasern auf einer Trommel oder einem Sieb zusammen mit pulverförmigem Mischkondensationsprodukt ablegt und anschliessend unter Erwärmen zusammenpresst bzw. zu Formteilen verarbeitet. Dabei schmilzt das Mischkondensat und verbindet nach dem Erkalten die einzelnen Fasern zu einem Formkörper. Die so hergestellten Dämmatten können je nach dem Grad des Zusammenpressens ein unterschiedliches Raumgewicht aufweisen, es liegt in der Regel zwischen 20 und 100 kg/m$^3$. Die Dämmatten enthalten üblicherweise 10 bis 40 Gew.-% des Mischkondensates als Schmelzkleber. Diese Matten können aufgrund des Schmelzklebergehalts in der Hitze direkt mit anderen Materialien, z.B. Metallen, Holz, Geweben, Faservliesen oder mit sich selbst verbunden werden.

Die Erfindung wird mit Hilfe der folgenden Beispiele näher erläutert. Die in den Beispielen angegebenen Teile sind Gewichtsteile. Die Angaben in Prozent beziehen sich auf das Gewicht der Stoffe. Die Schmelzpunkte der Kondensate wurden nach DIN 53 180 bestimmt.

**Beispiel 1**

In einem Kolben, der mit Rührer, Kühler, Thermometer und Tropftrichter ausgestattet ist, werden 282 Teile Phenol und 3 Teile p-Toluolsulfonsäure vorgelegt und bei ca. 50 °C geschmolzen. In die Schmelze werden unter kräftigem Rühren innerhalb von 5 bis 8 Minuten 238 Teile Isobutyraldehyd eingetragen. Dabei steigt die Temperatur auf 80 bis 90 °C an. Nach beendetem Eintragen wird 4 Stunden bei Rückfluss gerührt, wobei die Innentemperatur allmählich auf 95 bis 100 °C ansteigt. Anschliessend werden 3,5 Teile konz. Ammoniak rasch zudosiert. Man destilliert zunächst bei Normaldruck bis 130 °C Sumpftemperatur die niedrigsiedenden Anteile ab. Das Destillat besteht aus ca. 25 Teilen Isobutyraldehyd und 40 Teilen Wasser. Das Phenol-Isobutyraldehyd-Harz enthält pro Mol Phenol 1 Mol Isobutyraldehyd einkondensiert. Zu dem auf 130 °C erhitzten Phenol-Isobutyraldehyd-Harz gibt man dann 85 Teile eines Copolymerisates, das aus 65% Äthylen und 35% Vinylacetat aufgebaut ist. Das Copolymerisat hatte einen Schmelzindex von 120 g/10 Min. Die Reaktionskomponenten werden gut durchmischt. Dann destilliert man bei einem Druck von 30 mbar alle flüchtigen Bestandteile aus der Reaktionsmischung ab. Die Temperatur der Reaktionsmischung wird dabei auf 160 °C gesteigert. Die Mischkondensation ist nach einer Zeit von 30 Minuten bei 160 °C beendet. Man erhält 510 Teile eines hellbraun gefärbten Harzes, das einen Erweichungspunkt von 95 bis 105 °C aufweist. Es wird zu einem Pulver zermahlen und in dieser Form als Bindemittel für Faservliese verwendet.

Man geht dabei so vor, dass man 100 Teile regenerierte Cellulosefasern (vorzugsweise natürliche Fasern mit geringen Anteilen an synthetischen Fasern aus Polyester oder Polyamid) mit 30 Teilen des oben beschriebenen Mischkondensat-Pulvers im Luftstrom mischt und auf einer pneumatischen Anlage zu einem Vlies legt. Dieses Vlies wird dann zwischen beheizten Metallbändern (Lochbleche) zu einem Flächengebilde mit einer Dichte von ca. 30 bis 40 $kg/m^3$ bei einer Temperatur von etwa 200 °C verpresst. Die dabei entweichenden Abgase enthalten keine umweltschädlichen Bestandteile. Das verfestigte Vlies kann wieder erwärmt und zu Formteilen, z.B. Polsterungen und Dämmaterialien für die Automobilindustrie verpresst werden.

Die mit dem erfindungsgemässen Mischkondensat hergestellten Formteile erfüllen sämtliche Qualitätsanforderungen, die an Produkte für den Einsatz in der Automobilindustrie gestellt werden. Die Schwerentflammbarkeit entspricht der US-Norm FNVSS Nr. 302.

**Beispiel 2**

In einem wie in Beispiel 1 beschriebenen Kolben werden 282 Teile Phenol und 3 Teile p-Toluolsulfonsäure gemischt und bei ca. 50 °C geschmolzen. In die Schmelze werden 47 Teile eines aus 65% Äthylen und 35% Vinylacetat aufgebauten Copolymerisates (Schmelzindex 120 g/10 Min) eingetragen und anschliessend 238 Teile Isobutyraldehyd innerhalb von ca. 5 Minuten zugetropft. Die Temperatur des Reaktionsgemisches steigt dabei auf ca. 80 °C an. Nach beendetem Eintragen wird 4 Stunden bei Rückfluss gerührt, wobei die Innentemperatur auf 95 °C ansteigt. Anschliessend werden 3,5 Teile konz. Ammoniak rasch zudosiert und zunächst bei Normaldruck die niedersiedenden Anteile bis ca. 130 °C Sumpftemperatur abdestilliert. Das Destillat besteht aus 27 Teilen Isobutyraldehyd und 39 Teilen Wasser. Danach erniedrigt man vorsichtig den Druck und destilliert bei ca. 20 mbar alle flüchtigen Bestandteile ab und erhöht unter diesem Druck die Temperatur des Reaktionsgemisches bis auf 160 °C. Als Rückstand werden 452 Teile eines hellbraun gefärbten Mischkondensates erhalten, das einen Erweichungspunkt von 98 °C hat. Es wird als Schmelzkleber zum Verkleben von Glasfasermatten mit Metall (Eisenblechen) und als Bindemittel für Faservliese verwendet.

**Beispiel 3**

282 Teile Phenol und 3 Teile p-Toluolsulfonsäure werden in einem wie in Beispiel 1 beschriebenen Kolben bei 50 °C geschmolzen und innerhalb von 5 bis 8 Minuten mit 238 Teilen Isobutyraldehyd versetzt. Dabei steigt die Temperatur auf 80 bis 90 °C an. Nach beendeter Isobutyraldehydzugabe wird 4 Stunden unter Rückfluss gerührt, wobei die Innentemperatur auf 95 bis 100 °C ansteigt. Anschliessend werden 3,5 Teile konz. Ammoniak (25%ig) rasch zugegeben und zunächst bei Normaldruck bis 130 °C Sumpftemperatur die niedrigsiedenden Anteile abdestilliert. Das Destillat besteht aus 26 Teilen Isobutyraldehyd und 41 Teilen Wasser. Das Phenol-Isobutyraldehyd-Harz enthält pro Mol Phenol 1 Mol Isobutyraldehyd einkondensiert. Nach Zugabe von 85 Teilen eines aus 60% Äthylen und 40% Vinylacetat aufgebauten Copolymerisates (Schmelzindex 18 g/10 Min.) erniedrigt man den Druck und destilliert bei 20 bis 30 mbar bis 160 °C Sumpftemperatur alle flüchtigen Bestandteile aus der Reaktionsmischung ab. Die Mischkondensation ist innerhalb von 30 Minuten bei einer Temperatur von 160 °C beendet.

Als Rückstand werden ca. 500 Teile eines hellbraun gefärbten Mischkondensates erhalten, das einen Erweichungspunkt von 95 bis 100 °C hat. Das Mischkondensat wird zerkleinert und in Form eines Pulvers als Bindemittel für Faservliese aus Mineralfasern verwendet.

**Beispiel 4**

In einem wie in Beispiel 1 beschriebenen Rührkolben werden 282 Teile Phenol und 3 Teile p-Toluolsulfonsäure vorgelegt und bei 50 °C innerhalb von ca. 8 Minuten mit 238 Teilen Isobutyraldehyd versetzt. Dabei steigt die Temperatur auf 80 bis 90 °C an. Anschliessend wird 4 Stunden unter Rückfluss gekocht, wobei die Innentemperatur auf 95 bis 100 °C ansteigt. Nach beendeter Rückflusszeit werden 3,5 Teile konz. Ammoniak (25%ig) rasch zudosiert und zunächst bei Normaldruck die niedrigsiedenden Anteile bis ca. 130 °C Sumpftemperatur abdestilliert. Das Phenol-Isobutyraldehyd-Harz enthält pro Mol Phenol 1 Mol Isobutyraldehyd einkondensiert. Zum Kolbeninhalt gibt man sodann 100 Teile Polycaprolactam, legt vorsichtig Vakuum an und destilliert bei 20 mbar alle flüchtigen Bestandteile ab, wobei die Temperatur des Reaktionsgemisches auf 210 °C erhöht wird. Die Temperatur wird 1 Stunde bei 210 °C gehalten.

Als Rückstand verbleiben 498 g eines braun gefärbten Mischkondensates mit einem Erweichungspunkt von 96 °C. Es wird als Bindemittel für Faservliese aus Polyester oder Polyamid verwendet.

**Beispiel 5**

In einem wie in Beispiel 1 beschriebenen Rührkolben werden 282 Teile Phneol und 3 Teile p-Toluolsulfonsäure vorgelegt und bei 50 °C innerhalb von ca. 8 Minuten mit 238 Teilen Isobutyraldehyd versetzt. Dabei steigt die Temperatur auf 80 bis 90 °C an. Anschliessend wird 4 Stunden unter Rückfluss gekocht, wobei die Innentemperatur allmählich auf 95 bis 100 °C ansteigt. Nach beendeter Rückflusszeit werden 3,5 Teile konz. Ammoniak rasch zugegeben und bei Normaldruck die niedrigsiedenden Anteile bis ca. 130 °C Sumpftemperatur abdestilliert. Das Phenol-Isobutyraldehyd-Harz enthält pro Mol Phenol 1 Mol Isobutyraldehyd einkondensiert. Nach Zugabe von 85 Teilen eines Kondensationsproduktes aus Adipinsäure und Hexamethylendiamin legt man vorischtig Vakuum an und destilliert bei 20 bis 30 mbar bis 220 °C alle flüchtigen Bestandteile ab. Die Temperatur wird 2 Stunden bei 220 °C gehalten.

Als Rückstand erhält man 496 Teile eines dunkel gefärbten Mischkondensates, das einen Erweichungspunkt von 103 °C aufweist. Es wird als Bindemittel für Glasfaservliese verwendet.

**Beispiel 6**

300 Teile eines p-Octylphenol-Isobutyraldehyd-Harzes, das durch Kondensation von p-Octylphenol mit Isobutyraldehyd im Molverhältnis von 1 : 1,2 im sauren Medium erhalten wurde, werden in einem Kolben, der mit Rührer, Kühler und Thermometer ausgestattet ist, bei 140 °C geschmolzen und mit 60 Teilen eines Copolymerisates aus 65% Äthylen und 35% Vinylacetat versetzt. Die Schmelze wird auf 160 °C aufgeheizt und 2 Stunden bei dieser Temperatur gerührt. Das Harz wird noch heiss ausgegossen und nach dem Erkalten zerkleinert.

Als Ausbeute werden 340 Teile eines braun gefärbten Mischkondensates erhalten, das einen Erweichungspunkt von 82 °C aufweist. Es wird gepulvert und mit Holzspänen im Gewichtsverhältnis 1 : 0,2 vermischt. Diese Mischung wird bei 180 °C zu Platten verpresst.

**Beispiel 7**

282 Teile Phenol und 3 Teile p-Toluolsulfonsäure werden in einem wie in Beispiel 1 beschriebenen Kolben bei 50 °C geschmolzen und innerhalb von 5 bis 8 Minuten mit 238 Teilen Isobutyraldehyd versetzt. Dabei steigt die Temperatur auf 80 bis 90 °C an. Nach beendeter Isobutyraldehydzugabe wird 4 Stunden unter Rückfluss gekocht, wobei die Innentemperatur auf 95 bis 100 °C ansteigt. Anschliessend werden 3,5 Teile konz. Ammoniak rasch zugegeben und zunächst bei Normaldruck bis 130 °C Sumpftemperatur die niedrigsiedenden Anteile abdestilliert. Das Phenol-Isobutyraldehyd-Harz enthält pro Mol Phenol 1 Mol Isobutyraldehyd einkondensiert. Nach Zugabe von 85 Teilen Polyvinylchlorid erniedrigt man den Druck und destilliert bei 20 bis 30 mbar bis 160 °C Sumpftemperatur die flüchtigen Bestandteile ab. Die Temperatur wird dann noch 30 Minuten bei 160 °C gehalten. Als Rückstand verbleiben 481 Teile eines braun gefärbten Mischkondensates mit einem Erweichungspunkt von 92 bis 94 °C. Es wird als Bindemittel für Vliese aus Cellulosefasern verwendet.

**Beispiel 8**

In einem wie in Beispiel 1 beschriebenen Rührkolben werden 282 Teile Phenol und 3 Teile p-Toluolsulfonsäure vorgelegt und bei 50 °C innerhalb von 10 Minuten mit 238 Teilen Isobutyraldehyd versetzt. Dabei steigt die Temperatur auf 80 bis 90 °C an. Die Reaktionsmischung wird 4 Stunden unter Rückfluss gekocht, wobei die Innentemperatur auf 95 bis 100 °C ansteigt. Nach beendeter Rückflusszeit werden 3,5 Teile konz. Ammoniak rasch zugegeben und bei Normaldruck die niedrigsiedenden Anteile bis ca. 130 °C Sumpftemperatur abdestilliert. Das Phenol-Isobutyraldehyd-Harz enthält pro Mol Phenol 1 Mol Isobutyraldehyd einkondensiert. Anschliessend fügt man 85 Teile eines Polyesters aus Adipinsäure und Glykol hinzu, legt vorsichtig Vakuum an und destilliert bei 20 mbar bis 160 °C Sumpftemperatur alle flüchtigen Bestandteile ab. Die Mischkondensation ist innerhalb von 20 Minuten bei 160 °C beendet.

Man erhält 462 Teile eines hellbraunen Mischkondensates mit einem Erweichungspunkt von 80 °C. Es wird als Bindemittel für Vliese aus Polyamid-, Polyacryl- oder Polyesterfasern verwendet.

**Beispiel 9**

282 Teile Phenol und 3 Teile p-Toluolsulfonsäure werden in einem wie in Beispiel 1 beschriebenen Kolben vorgelegt und bei 50 °C innerhalb von 10 Minuten mit 238 Teilen Isobutyraldehyd versetzt. Die Temperatur steigt dabei auf ca. 90 °C. Nach beendeter Isobutyraldehydzugabe wird 4 Stunden unter Rückfluss gekocht, wobei die Innentemperatur allmählich auf 95 bis 100 °C ansteigt. Anschliessend werden 3,5 Teile konz. Ammoniak rasch zugegeben und zunächst bei Normaldruck die niedersiedenden Anteile bis ca. 130 °C Sumpftemperatur abdestilliert. Das Phenol-Isobutyraldehyd-Harz enthält pro Mol Phenol 1 Mol Isobutyraldehyd einkondensiert. Zum Kolbeninhalt gibt man sodann 100 Teile eines handelsüblichen Weichharzes auf Harnstoff-Formaldehyd-Basis, legt vorsichtig Vakuum an und destilliert bei 20 Torr bis 160 °C alle flüchtigen Bestandteile ab. Die Mischkondensation ist nach 10 Minuten bei 160 °C beendet. Das zurückbleibende Mischkondensat (440 Teile) weist einen Erweichungspunkt von 128 °C auf. Es wird als Bindemittel für Vliese aus Cellulosefasern verwendet.

**Beispiel 10**

282 Teile Phenol und 3 Teile p-Toluolsulfonsäure werden in einem wie in Beispiel 1 beschriebenen Kolben vorgelegt und bei 50 bis 60 °C innerhalb von ca. 10 Minuten mit 238 Teilen n-Butyraldehyd versetzt. Die Temperatur steigt dabei auf 80 °C an. Nach beendetem Eintragen wird 4 Stunden bei Rückfluss gerührt, wobei die Innentemperatur allmählich auf 102 °C ansteigt. Anschliessend werden 3,5 Teile konz. Ammoniak rasch zugegeben und zunächst bei Normaldruck die niedersiedenden Anteile bis ca. 130 °C Sumpftemperatur abdestilliert. Das Phenol-Butyraldehyd-Harz enthält pro Mol Phenol 1 Mol n-Butyraldehyd einkondensiert. Nach Zugabe von 85 Teilen eines Copolymerisates, das aus 65% Äthylen und 35% Vinylacetat aufgebaut ist, legt man Vakuum an

und destilliert bei 20 bis 30 mbar bis 160 °C Sumpftemperatur die flüchtigen Bestandteile ab. Die Mischkondensation ist nach 30 Minuten bei einer Temperatur von 160 °C beendet.

Man erhält 462 Teile eines dunkelbraun gefärbten Mischkondensates mit einem Erweichungspunkt von 60 °C. Wird die Mischkondensation 6 Stunden bei 160 °C vorgenommen, so erhält man ein Mischkondensat mit einem Erweichungspunkt von 62 °C. Das Mischkondensat wird als Bindemittel für Faservliese aus Polyvinylchloridfasern verwendet.

**Beispiel 11**

282 Teile Phenol und 3 Teile p-Toluolsulfonsäure werden in einem wie in Beispiel 1 beschriebenen Kolben vorgelegt und bei 50 °C innerhalb von 10 Minuten mit 238 Teilen Isobutyraldehyd versetzt. Die Temperatur steigt dabei auf ca. 90 °C an. Nach beendeter Isobutyraldehydzugabe wird das Reaktionsgemisch 4 Stunden unter Rückfluss gekocht, wobei die Innentemperatur allmählich auf 95 bis 100 °C ansteigt. Danach fügt man 20 Teile Harnstoff hinzu und lässt weitere 2 Stunden unter Rückfluss kochen. Nach Zugabe von 3,5 Teilen konz. Ammoniak werden zunächst bei Normaldruck bis 130 °C und dann unter Vakuum bei 20 bis 30 mbar bis 160 °C alle flüchtigen Bestandteile abdestilliert. Das Phenol-Isobutyraldehyd-Harz enthält pro Mol Phenol 1 Mol Isobutyraldehyd einkondensiert.

Das mit Harnstoff modifizierte Phenol-Isobutyraldehyd-Harz wird anschliessend bei einer Temperatur von 160 ° C innerhalb von 30 Minuten mit 85 Teilen eines aus 65% Äthylen und 35% Vinylacetat aufgebauten Copolymerisates mischkondensiert.

Als Rückstand verbleiben 435 Teile eines hellbraun gefärbten Mischkondensates mit einem Erweichungspunkt von 96 °C. Es wird als Bindemittel für Faservliese aus Cellulosefasern verwendet.

**Beispiel 12**

In einem Kolben, der mit Rührer, Kühler, Thermometer und Wasserauskreiser ausgestattet ist, werden 640 Teile Xylol, 400 Teile eines Phenol-Isobutyraldehyd-Harzes, das durch Kondensation von Phenol mit Isobutyraldehyd im Molverhältnis von 1 : 1,1 in Gegenwart von Salzsäure erhalten wurde, und 160 Teile einer 50%igen wässrigen Dispersion eines Vinylpropionat-Methylacrylat-Copolymerisates vorgelegt und auf Rückflusstemperatur aufgeheizt. Die Mischung wird 4 Stunden bei Rückflusstemperatur gerührt, wobei das Wasser aus der Polymerdispersion über einen Wasserauskreiser ausgetragen wird. Anschliessend werden unter Vakuum bis zum Erreichen einer Sumpftemperatur von 180 °C Xylol und niedrigsiedende Anteile abdestilliert. Das verbleibende Mischkondensat (470 Teile) weist einen Erweichungspunkt von 135 °C auf. Es ist in Tetrahydrofuran löslich und kann in gelöster Form zur Herstellung dünner Filme (Schmelzkleberfolien) verwendet werden, die beim Erhitzen klebrig werden.

Das Mischkondensat kann auch in Form eines Pulvers als Bindemittel für Faservliese eingesetzt werden.

**Beispiel 13**

In einem Kolben, der mit Rührer, Kühler und Thermometer ausgestattet ist, werden 400 Teile eines Phenol-Isobutyraldehyd-Harzes, das durch Kondensation von Phenol mit Isobutyraldehyd in Gegenwart von Phosphoroxytrichlorid im Molverhältnis von 1 : 1,1 erhalten wurde, bei 140 °C geschmolzen und mit 80 Teilen eines Copolymerisates aus 70% Styrol, 20% Isobutylacrylat und 10% Maleinsäuremonobutylester versetzt. Die Mischung wird auf 180 °C aufgeheizt und 30 Minuten bei dieser Temperatur gerührt. Das Mischkondensat wird noch heiss ausgegossen und nach dem Erkalten zerkleinert. Man erhält 472 Teile eines hellbraun gefärbten Mischkondensates, das einen Erweichungspunkt von 118 °C aufweist. Es wird als Bindemittel für Faservliese aus Regeneratfasern verwendet.

**Beispiel 14**

Aus 100 Teilen regenerierten Cellulosefasern und 30 Teilen des im Beispiel 1 beschriebenen Mischkondensates werden nach der im Beispiel 1 angegebenen Vorschrift Vliese gelegt und anschliessend zu Formteilen verpresst. Die bei dem Pressvorgang entstehenden Abgase wurden auf den Phenolgehalt untersucht. Er betrug 0,01%.

**Vergleichsbeispiel**

Beispiel 14 wird mit der Ausnahme wiederholt, dass anstelle eines erfindungsgemässen Mischkondensates 30 Teile eines Phenol-Formaldehyd-Harzes (Erweichungsbereich 98–100 °C) eingesetzt werden. Beim Verpressen zu Formteilen wird der Phenolgehalt des Abgases bestimmt. Er beträgt in diesem Fall 3%.

**Patentansprüche**

1. Verfahren zur Herstellung von Mischkondensationsprodukten auf Basis von Phenol oder Phenolderivaten und Butyraldehyd durch Kondensieren eines Phenols mit Butyraldehyd in Gegenwart von sauren Katalysatoren, dadurch gekennzeichnet, dass man pro Mol Phenol 0,8 bis 2,0 Mol Butyraldehyd einsetzt, und vor, während oder nach der Kondensation von Phenol und Butyraldehyd 5 bis 50 Gew.-% bezogen auf Phenol und Butyraldehyd, eines funktionelle Gruppen enthaltenden thermoplastischen Kunststoffs oder eines Gemisches solcher Kunststoffe zusetzt, und eine Mischkondensation bei Temperaturen von 80 bis 220 °C durchführt.

2. Verfahren nach Anspruch 1, dadurch gekennzeichnet, dass man Phenol und Isobutyraldehyd einsetzt.

3. Verfahren nach den Ansprüchen 1 und 2, dadurch gekennzeichnet, dass man den (die) funktionelle Gruppen enthaltenden Kunststoff(e) nach Beendigung der Kondensation des Phenols mit Butyraldehyd zusetzt.

4. Verfahren nach Anspruch 3, dadurch gekennzeichnet, dass man das Kondensationsprodukt

aus Phenol und Butyraldehyd vor der Mischkondensation mit mindestens einem funktionelle Gruppen enthaltendem thermoplastischen Kunststoff neutralisiert.

5. Verfahren nach den Ansprüchen 1 bis 4, dadurch gekennzeichnet, dass man bei der Mischkondensation 10 bis 25 Gew.-% des thermoplastischen Kunststoffes zusetzt, der funktionelle Gruppen enthält.

6. Verfahren nach den Ansprüchen 1 bis 5, dadurch gekennzeichnet, dass man bei der Kondensation eines Phenols mit Butyraldehyd pro Mol Phenol bis zu 0,4 Mol Harnstoff, eines cyclischen Harnstoffes oder eines Aminotriazins und/oder deren Methylol- oder Alkoxymethylderivate als Modifizierungsmittel verwendet.

7. Mischkondensate, erhalten gemäss dem Verfahren nach Anspruch 1.

8. Verwendung der nach den Ansprüchen 1 bis 6 erhaltenen Mischkondensate als Schmelzkleber.

**Revendications**

1. Procédé de préparation de produits de condensation mixte à base de phénol ou de dérivés de phénol et de butyraldéhyde par condensation d'un phénol avec du butyraldéhyde en présence de catalyseurs acides, caractérisé par le fait qu'on fait réagir, par mole de phénol, 0,8 à 2,0 moles de butyraldéhyde et avant, pendant ou après la condensation du phénol et du butyraldéhyde on ajoute 5 à 50% en poids, rapportés au phénol et au butyraldéhyde, d'une matière thermoplastique ou d'un mélange de telles matières plastiques, contenant des groupes fonctionnels et on effectue une condensation mixte à des températures de 80 à 220 °C.

2. Procédé selon la revendication 1, caractérisé par le fait que l'on fait réagir du phénol et de l'isobutyraldéhyde.

3. Procédé selon les revendications 1 et 2, caractérisé par le fait que l'on ajoute la (ou les) matière(s) plastique(s) contenant des groupes fonctionnels après la fin de la condensation du phénol avec le butyraldéhyde.

4. Procédé selon la revendication 3, caractérisé par le fait que l'on neutralise le produit de condensation de phénol et butyraldéhyde avant la condensation mixte, avec au moins une matière thermoplastique contenant des groupes fonctionnels.

5. Procédé selon les revendications 1 à 4, caractérisé par le fait que, pour la condensation mixte, on ajoute 10 à 25% en poids de la matière thermoplastique qui contient des groupes fonctionnels.

6. Procédé selon les revendications 1 à 5, caractérisé par le fait que, pour la condensation d'un phénol avec du butyraldéhyde, on utilise, comme agent modificateur, par mole de phénol, jusqu'à 0,4 mole d'urée, urée cyclique ou aminotriazine et/ou de leurs dérivés méthyloliques ou alcoxyméthyliques.

7. Condensat mixte obtenu selon le procédé de la revendication 1.

8. Utilisation du condensat mixte obtenu selon les revendications 1 à 6, comme colle thermoplastique («Hotmelt»).

**Claims**

1. A process for the preparation of co-condensation products based on a phenol or phenol derivative and butyraldehyde by condensing a phenol with butyraldehyde in the presence of an acid catalyst, characterized in that from 0.8 to 2.0 moles of butyraldehyde are employed per mole of phenol and before, during or after the condensation of the phenol with the butyraldehyde, from 5 to 50% by weight, based on the phenol and butyraldehyde, of a thermoplastic containing functional groups or of a mixture of such plastics is added and the co-condensation is carried out at from 80 to 220 °C.

2. A process as claimed in claim 1, characterized in that phenol and isobutyraldehyde are employed.

3. A process as claimed in claims 1 and 2, characterized in that the plastic(s) containing functional groups is/are added after completion of the condensation of the phenol with butyraldehyde.

4. A process as claimed in claim 3, characterized in that the phenol-butyraldehyde condensation product is neutralized before the co-condensation with at least one thermoplastic containing functional group.

5. A process as claimed in claims 1 to 4, characterized in that from 10 to 25% by weight of the thermoplastic containing functional groups are added for the co-condensation.

6. A process as claimed in claims 1 to 5, characterized in that, when condensing a phenol with butyraldehyde, up to 0.4 mole, per mole of phenol, of urea, a cyclic urea or an aminotriazine and/or a methylol or alkoxymethyl derivative thereof is used as a modifier.

7. Co-condensates obtained by the process as claimed in claim 1.

8. Use of the co-condensates obtained according to claims 1 to 6 as hot-melt adhesives.